# EUROPÄISCHE PATENTSCHRIFT

(11) **EP 2 852 860 B1**
(45) Veröffentlichungstag und Bekanntmachung des Hinweises auf die Patenterteilung: **26.08.2020**
(21) Anmeldenummer: 13724738.3
(22) Anmeldetag: 17.05.2013
(51) Int. Cl.: G02B 27/01

(54) **VERFAHREN ZUR KALIBRIERUNG EINES HEAD-UP-DISPLAYS**
METHOD FOR CALIBRATING A HEAD-UP DISPLAY
PROCÉDÉ D'ÉTALONNAGE D'UN AFFICHAGE TÊTE HAUTE

(30) Priorität: 23.05.2012 DE 102012010120
(43) Veröffentlichungstag der Anmeldung: 01.04.2015
(73) Patentinhaber: Audi AG, 85045 Ingolstadt (DE)
(72) Erfinder: ZINK, Oliver, 82266 Inning (DE); HEIM, Marcus, 85309 Pörnbach (DE)
(74) Vertreter: Thielmann, Frank
(86) Internationale Anmeldenummer: PCT/EP2013/001485
(87) Internationale Veröffentlichungsnummer: WO 2013/174501

(56) Entgegenhaltungen:
- WO-A2-2007/083215
- DE-A1-102007 045 301
- DE-B4-102005 037 797
- FR-A1- 2 860 601

## Beschreibung

Die Erfindung betrifft ein Verfahren zur Kalibrierung eines Head-up-Displays nach dem Oberbegriff des unabhängigen Anspruchs 1.

Die DE 10 2005 037 797 B4 beschreibt ein System zur automatischen Kalibrierung eines Head-Up-Displays eines Kraftfahrzeugs. Das Head-Up-Display wird für jedes einzelne Fahrzeug abgestimmt eingestellt. Dazu wird eine Kameravorrichtung in die Position der Augen eines Bedieners des Fahrzeugs gefahren.

Die Offenlegungsschrift DE 10 2007 045 301 A1 betrifft eine Anordnung zur Charakterisierung von reflektiv abbildenden Projektionssystemen sowie ein dazugehöriges Verfahren. Die Anordnung besteht aus den in Lichtausbreitungsrichtung angeordneten Baugruppen Bildgeber, Abbildungsoptik, reflektierende Fläche und Kamera sowie einer Ansteuereinrichtung, die mit dem Bildgeber verbunden ist und einem Computer, der mit der Kamera verbunden ist. Zwischen der der Abbildungsoptik und der reflektierenden Fläche ist ein streuende Platte einschiebbar, welcher eine Gitterstruktur eingeprägt ist. Der Computer steuert einen Mustergenerator steuert, der mit der Ansteuereinrichtung des Bildgebers verbunden ist.

Ein Head-up-Display wird zur Darstellung von Informationen auf einer Projektionsfläche in Form einer Windschutzscheibe in einer Cockpit-Konsole eines Fahrzeugs montiert, von wo aus ein Projektor des Head-up-Displays ein entsprechendes Bild auf die Windschutzscheibe werfen kann. Das Bild trifft auf einen Bereich der Windschutzscheibe, von welchem aus ein reflektierter Lichtstrahl ins Auge eines Fahrers fallen kann. Die Größe der eingesetzten optischen Elemente und einer Austrittsöffnung definiert über das größtmögliche Lichtstrahlbündel die Größe einer Eyebox, also einen Bereich in einer y-z-Ebene, in dem sich die Augen des Fahrers befinden müssen, damit das virtuelle Bild auf der Windschutzscheibe wahrgenommen werden kann. Der Fahrer nimmt die entstandene Darstellung auf der Windschutzscheibe nicht als Spiegelung in der Windschutzscheibe wahr, sondern empfindet die Darstellung vor dem Fahrzeug befindlich. Unter Eyebox wird hier eine Eyebox (Ist-Eyebox) verstanden, die sich durch die tatsächliche (möglicherweise fehlerhafte Einstellung) des Head-up-Displays ergibt.

Das Head-up-Display wird zusammen mit der Cockpit-Konsole in das Fahrzeug eingebaut, sodass die Installation des Head-up-Displays in die Cockpit-Konsole außerhalb des Fahrzeugs stattfindet. Bei beiden Fertigungsschritten können Lagefehler auftreten, die einerseits ein unscharfes Bild in der Darstellung der Informationen auf der Windschutzscheibe ergeben können und andererseits auch die Eyebox (Ist-Eyebox) von einer konstruktiv bestimmten Nulllage (Soll-Eyebox) abweichen lassen können. Deshalb wird bei der Fahrzeugfertigung das Head-up-Display kalibriert, damit eine klare und eindeutige Darstellung auf der Windschutzscheibe möglich ist.

Hierzu sind aus dem Stand der Technik unterschiedliche Verfahren und Maßnahmen bekannt, bei denen beispielsweise ein Testbild bzw. ein Kalibrierungsmuster durch das Head-up-Display auf die Windschutzscheibe geworfen wird. Dieses Testbild kann von in dem fertig montierten Fahrzeug angeordneten Kameras aufgenommen werden, mit deren Hilfe und mittels eines Abgleichs das Head-up-Display bzw. der Projektor des Head-up-Displays auf eine gewünschte Lage eingestellt werden kann.

Es gibt Kalibrierverfahren, die in der Lage sind, Bildverzerrungen zu beseitigen. Aufgrund der konstruktiv vorgegebenen Nulllage der Eyebox (Soll-Eyebox) im Innenraum des Fahrzeugs ist es auch wünschenswert, alternativ oder zusätzlich die (tatsächliche) Lage der Eyebox (Ist-Eyebox) kalibrieren zu können.

Es ist deshalb eine Aufgabe der vorliegenden Erfindung, ein Verfahren zur Kalibrierung eines Head-up-Displays bereitzustellen, mit dem eine Kalibrierung (ausgehend von dem bekannten Verfahren) noch weiter verbessert wird, sodass das Verfahren automatisch mit einer hohen Wiederholungsgenauigkeit durchgeführt werden kann und sich für einen routinemäßigen Einsatz zur Kalibrierung einer Eyebox-Lage (Ist-Eyebox) eignet.

Ein Verfahren zur Lösung der erfinderischen Aufgabe weist die Merkmale des unabhängigen Anspruchs 1 auf. Danach wird ein Verfahren zur Kalibrierung eines Head-up-Displays in einem Kraftfahrzeug vorgeschlagen, bei dem eine Kamera in einer definierten Position, in dem Fahrzeug positioniert wird und das Head-up-Display ein Testbild auf eine Windschutzscheibe des Fahrzeugs projiziert, wobei die Kamera aufgrund der technischen Auslegung des Head-up-Displays nur eine teilweise Aufnahme des Testbilds machen kann, wenn sie sich außerhalb einer Ist-Eyebox befindet, wobei eine Beschnittmessung durchgeführt wird, wobei eine teilweise Aufnahme des Testbilds von oberhalb und/oder unterhalb einer Soll-Eyebox gemacht wird, wobei mittels eines Rechenprogramms ein Teil des Testbildes ermittelt wird, der in der teilweisen Aufnahme des Testbilds fehlt. Aus der ermittelten Größe des für die Kamera gerade noch sichtbaren Teils eines vordefinierten Zeichens oder Musters oder einer vordefinierten Form in dem Testbild wird eine Relativposition einer Ist-Eyebox zur Kamera ermittelt. Zusätzlich kann mit einem Vergleich der aufgenommenen beschnittenen Testbilder eine Höhenkorrektur einer Ist-Eyebox durchgeführt werden.

Mit der Aufnahme des beschnittenen Testbildes kann eine Eyebox-Lage-Korrektur automatisch durchgeführt werden mit einer hohen Wiederholungsgenauigkeit, sodass das Verfahren für den routinemäßigen Einsatz zur Kalibrierung einer Eyebox-Lage (Ist-Eyebox) eingesetzt werden kann. Je nach Relativposition der Eyebox (Ist-Eyebox) zur Kamera kann mit der Kamera ein Teil des Testbilds nicht wahrgenommen werden, der (aufgrund der technischen Auslegung des Head-up-Displays) außerhalb eines Sichtbereichs der Kamera liegt. Je nach Relativposition der Eyebox (Ist-Eyebox) zur Kamera wird ein (mehr oder weniger großer) oberer oder unterer Teil des Bildes abgeschnitten, ist also für die Kamera nicht sichtbar. Die Kamera nimmt dann von dem Testbild ein beschnittenes Bild (also ein beschnittenes Testbild) auf.

Zur Kalibrierung des Head-up-Displays wird eine tatsächliche Lage der Eyebox (Ist-Eyebox) ermittelt. Dazu wird eine Beschnittmessung durchgeführt, in welcher ermittelt wird, wie groß der (beispielsweise obere, untere, linke oder rechte) Teil des Testbilds ist, der in dem von der Kamera aufgenommenen Bild abgeschnitten ist, also für die Kamera nicht sichtbar ist. Dazu kann in dem Testbild mindestens ein vordefiniertes Zeichen (Messzeichen) oder Muster (Kalibrierungsmuster) oder mindestens eine vordefinierte Form vorgesehen sein, das bzw. die je nach Relativposition der Eyebox (Ist-Eyebox) zur Kamera beschnitten (abgeschnitten), also für die Kamera nicht sichtbar ist.

Das vordefinierte Zeichen oder Muster beziehungsweise die vordefinierte Form ist vorzugsweise so gestaltet, dass eine Größe (beispielsweise Breite oder Höhe) des für die Kamera gerade noch sichtbaren (d.h. aufnehmbaren) Teils des vordefinierten Zeichens oder Musters beziehungsweise der vordefinierten Form in dem Testbild mittels einer automatischen Auswertung des Testbilds ermittelt werden kann. Hierzu eignen sich vordefinierte Zeichen oder Muster oder Formen, in denen eine Höhe oder Breite eines am Rand des Testbilds abgeschnittenen Teils (Beschnitts) des Zeichens oder Musters oder Form sich streng monoton (vorzugsweise proportional) mit einem Versatz der Kamera zur Eyebox (Ist-Eyebox) verändert. Das vordefinierte Zeichen oder Muster beziehungsweise die vordefinierte Form kann beispielsweise mindestens eine Raute (Rhombe) umfassen.

Alternativ oder zusätzlich kann das vordefinierte Zeichen auch einen örtlichen Farbverlauf und/oder einen örtlichen Verlauf einer Ortsfrequenz und/oder einen örtlichen Verlauf einer zeitlichen Helligkeitsänderung (beispielsweise Blinkfrequenz) umfassen. In diesem Fall umfasst die von der Kamera aufzunehmende und in der nachfolgenden Auswertung auszuwertende Größe beispielsweise eine in dem aufgenommenen Testbild enthaltene maximale (oder minimale) Farbfrequenz, maximale (oder minimale) Ortsfrequenz und/oder maximale (oder minimale) Blinkfrequenz.

Aus der ermittelten Größe (beispielsweise Höhe oder Breite) des für die Kamera gerade noch sichtbaren (d.h. aufnehmbaren) Teils des vordefinierten Zeichens oder Musters beziehungsweise der vordefinierten Form kann in einer nachfolgenden Auswertung (beispielsweise mittels einer Tabelle oder mittels einer Umrechnungsformel) die Relativposition der Eyebox (Ist-Eyebox) zur Kamera ermittelt werden.

Nach dem erfindungsgemäßen Verfahren wird die Kamera in eine Position gebracht, die wenigstens zum Teil außerhalb der Eyebox (Soll-Eyebox) liegt, wobei insbesondere von außerhalb der Eyebox (Soll-Eyebox) eine Aufnahme mit der Kamera von dem (beschnittenen) Testbild gemacht wird. Eine Lage außerhalb der Eyebox (Soll-Eyebox) bedeutet für einen Fahrer bzw. die Kamera, dass das Testbild (zumindest bei korrekter Kalibrierung, d.h. korrekter Einstellung des Head-up-Displays) nur teilweise oder gar nicht sichtbar wäre. Dadurch wird das Testbild durch die (wenigstens zum Teil außerhalb der Soll-Eyebox positionierte) Kamera (zumindest bei korrekter Einstellung des Head-up-Displays) nur teilweise aufgenommen.

Es ist vorgesehen, dass eine Beschnittmessung des (beschnittenen) Testbildes durchgeführt wird. Zur vertikalen Kalibrierung der Eyebox (Ist-Eyebox) kann durch die Aufnahme von oberhalb und unterhalb der Eyebox (Soll-Eyebox) eine Nulllage (korrekte Einstellung des Head-up-Displays), wie sie konstruktionsseitig vorgesehen ist, leicht bestimmt werden. Deshalb wird die Kamera an definierte Positionen oberhalb und unterhalb der maßgeblichen Nulllage einer Eyebox (Soll-Eyebox) geführt, um von dort das (beschnittene) Testbild aufzunehmen.

Zur Beschnittmessung wird von oberhalb und/oder unterhalb der Eyebox (Soll-Eyebox) eine Aufnahme des (beschnittenen) Testbilds gemacht. Das Testbild wird mittels des Projektors des Head-up-Displays auf die Windschutzscheibe projiziert, wobei das Testbild (für die Kamera und den Fahrer) lediglich aus einer Position in der Eyebox (Soll-Eyebox) vollständig ersichtlich ist.

Die jeweiligen Aufnahmen von oberhalb und unterhalb der Eyebox (Soll-Eyebox) stellen einen Teil des Testbilds dar, wobei insbesondere mittels einer Bildauswertung eine Größe eines fehlenden Teils des jeweils aufgenommenen Testbilds bestimmt wird. Durch die Lage der Kamera außerhalb der Eyebox (Soll-Eyebox) und aufgrund der vermeintlich nicht exakten Einbaulage des Head-up-Displays können die fehlenden Teile der jeweils aufgenommenen (beschnittenen) Testbilder unterschiedlich groß sein. Die aufgenommenen Bilder werden an einen Rechner mit einem Bildauswertungsprogramm weitergeleitet, das entsprechenden berechneten Algorithmen die Größe der fehlenden Teile der aufgenommenen Bilder berechnen kann.

Ein Ausführungsbeispiel sieht vor, dass mit einem Vergleich der aufgenommenen Bilder (beschnittenen Testbilder) eine Höhenkorrektur der Eyebox (Ist-Eyebox) durchgeführt wird. Mit den Aufnahmen von oberhalb und unterhalb der Eyebox (Soll-Eyebox) ist vor allem eine Höhenlage der Eyebox (Ist-Eyebox) selbst bestimmbar, sodass die Höhe der Eyebox (Ist-Eyebox) zur konstruktiven Nulllage vertikal einstellbar ist.

Weiterhin kann das Verfahren vorsehen, dass die jeweils fehlenden Teile der aufgenommenen Testbilder verglichen und in Übereinstimmung gebracht werden, wobei insbesondere der jeweils nicht dargestellte Teil der Testbilder in einer Nulllage der Eyebox (d.h. wenn sich die Ist-Eyebox in der konstruktiven Nulllage befindet) im Wesentlichen gleich groß ist. Nach der Bildauswertung und der Bestimmung der Größe der nicht dargestellten Teile der Testbilder kann der Projektor des Head-up-Displays bzw. das Head-up-Display selbst entsprechend kalibriert werden, wobei die Eyebox (Ist-Eyebox) derart vertikal verschoben wird, dass sie der vorbestimmten Nulllage (Soll-Eyebox) entspricht.

Bei einer Aufnahme von oberhalb der Eyebox (Soll-Eyebox) ist ein oberer Teil des Testbilds und bei einer Aufnahme von unterhalb der Eyebox (Soll-Eyebox) ist ein unterer Teil des Testbilds nicht sichtbar. Durch die Lage der Kamera außerhalb der Eyebox (Soll-Eyebox) kann entsprechend einer Relativposition der Kamera zur Eyebox nicht der Teil des Testbilds wahrgenommen werden, der (aufgrund der technischen Auslegung des Head-up-Displays) außerhalb eines Sichtbereichs der Kamera liegt. Deshalb wird bei einer Aufnahme von oberhalb der Eyebox ein oberer Teil des Bildes abgeschnitten und bei einer Aufnahme von unterhalb ein unterer Teil des Bildes. Wenn die in diesem Absatz erwähnte Eyebox eine Soll-Eyebox ist, kann die Kamera aufgrund der vorbekannten Position der Nulllage und Größe der Soll-Eyebox so positioniert werden, dass die Aufnahme von oberhalb der Eyebox (Soll-Eyebox) beziehungsweise von unterhalb der Eyebox (Soll-Eyebox) erfolgt. Wenn die in diesem Absatz genannte Eyebox eine Ist-Eyebox ist, kann die Kamera aufgrund einer Auswertung einer vorausgehenden Aufnahme so positioniert werden, dass die Aufnahme von oberhalb der Eyebox (Ist-Eyebox) beziehungsweise von unterhalb der Eyebox (Ist-Eyebox) erfolgt (wobei auch in diesem Fall für die nachfolgende Auswertung die Position der Kamera gegenüber der vorbestimmten Nulllage [der Soll-Eyebox] erfasst werden muss).

Bei der Höhenkorrektur wird die Eyebox (Ist-Eyebox) in dem Verfahren in einer vertikalen Richtung nach oben oder unten verstellt, wodurch die Eyebox (Ist-Eyebox) in die gewünschte Nulllage verschoben werden kann.

Weiterhin kann vorgesehen sein, dass das Testbild eine Struktur zur Bildauswertung aufweist, wobei insbesondere wenigstens zwei auf einer Spitze stehende Rhomben dargestellt sind. Die Rhomben sind besonders vorteilhaft zur Bildauswertung, da mittels schräger Kanten der Rhomben zu einer Bildquerachse die Ermittlung der nicht dargestellten Teile des Testbilds leicht ist.

Weitere vorteilhafte Ausführungsbeispiele der Erfindung sind Teil der abhängigen Ansprüche.

Ein bevorzugtes Ausführungsbeispiel wird anhand der Zeichnung nachfolgend näher erläutert. Dabei zeigen:
- Fig. 1: das Schema der Kalibrierung mit einer Kamerastellung oberhalb und unterhalb einer Eyebox sowie eine Windschutzscheibe mit Projektor und die Eyebox selbst,
- Fig. 2: eine Ansicht in Längsrichtung einer Eyebox mit verschiedenen Punkten innerhalb der Eyebox, und
- Fig. 3: das Testbild, und
- Fig. 4: jeweils ein Bild von oberhalb bzw. unterhalb der Eyebox aufgenommen.

Bei der Fertigung eines Kraftfahrzeugs wird ein Head-up-Display 10, im nachfolgenden HUD genannt, zusammen mit einer Cockpitkonsole bzw. einer Armaturenbrettkonsole in das Fahrzeug eingebaut. Vorher wurde das vormontierte HUD 10 in die Konsole eingesetzt. Der Einbau bedingt Fertigungstoleranzen, weshalb jedes Fahrzeug und jedes HUD 10 etwas anders ist bzw. die Lage eines HUD 10 zu einer Windschutzscheibe 11 variieren kann.

Deshalb wird jedes eingebaute HUD 10 auf das Fahrzeug abgestimmt, da ansonsten durch die Fertigungstoleranzen unscharfe oder nicht korrekt wiedergegebene Bilder auftreten können. Hierbei spielen nicht nur die Fertigungstoleranzen im Bereich des HUD 10 eine Rolle, sondern alle in einem Fahrgastraum des Fahrzeugs angeordneten Bauteile, wie die Windschutzscheibe oder ein Sitz.

Mit dem im Folgenden vorgestellten Verfahren kann die Lage des HUD 10 zumindest teilweise derart eingestellt werden, dass die Lage einer gewünschten und von Konstruktionsseite bestimmten Position entspricht. Hierbei ist vor allem eine Lage einer sogenannten Eyebox (Ist-Eyebox) zu kalibrieren, die durch einen Lichtstrahlbündel definiert wird, der von der Windschutzscheibe 11 reflektiert wird. Das HUD 10 wirft mittels einer Lichtquelle in Form eines Projektors 12 einen Lichtstrahl auf die Windschutzscheibe 11, von wo aus das Licht in Richtung eines Fahrers gespiegelt wird. Das Lichtstrahlbündel bzw. die Eyebox ist (bei korrekter Einstellung des Head-up-Displays) derart in Richtung Fahrer gerichtet, dass dieser (in einer normalen Sitzposition) problemlos die dargestellten Informationen erkennen und ablesen kann.

Eine Eyebox (Ist-Eyebox) ist eine dreidimensionale Fläche, die durch einen optischen Kollimator erzeugt wird. Der Kollimator erzeugt einen Strahlengang, der aus parallelen Lichtstrahlen gebildet ist, wobei ein Betrachter eine darzustellende Information nur sehen kann, wenn er sich mit seinen Augen innerhalb dieses Strahlengangs befindet. Da der Strahlengang eine gewisse Größe aufweist, kann der Betrachter sich in den Grenzen des Strahlengangs bewegen, wobei er aber nur Teile der Informationen erkennen kann, wenn er sich außerhalb des Strahlenganges befindet.

Die Eyebox muss konstruktionsbedingt unter einem bestimmten Winkel in Richtung Fahrer abgestrahlt werden, damit das projizierte Bild erkennbar ist. Es ist vorgesehen, die Eyebox für Fahrer mit einer bestimmten Körpergröße einzurichten, die exakt zu der Eyebox passt, wenn der Fahrer auf dem Fahrersitz sitzt. Die genaue Anordnung im Wagen entspricht einer Nulllage der Eyebox. Die Nulllage entspricht einer konstruktiv berechneten Solllage. Es ist für kleinere und größere Fahrer möglich, das HUD 10 nach oben oder unten zu justieren und auf ihre Körper- bzw. Sitzgröße einzustellen. Deshalb ist es vorgesehen, dass nach Einbau des HUD 10 dieses auf die Nulllage kalibriert wird, damit die Möglichkeit zur Einstellung für den Fahrer gegeben ist.

Zur Kalibrierung wird jedes gefertigte Fahrzeug genau vermessen, und aus den Daten wird mittels eines dafür speziell ausgelegten Algorithmus jeweils die gewünschte Nulllage der Ist-Eyebox ermittelt (gleich konstruktive Nulllage). Mit diesen Daten wird eine Kamera 13 durch ein offenes Fenster in das Fahrzeuginnere gefahren, wo die Kamera 13 in der berechneten (konstruktiven) Nulllage angeordnet wird. Die Kameraposition entspricht dabei in etwa der Lage eines Kopfes eines für die (konstruktive) Nulllage bestimmten Fahrers. Die Kamera 13 wird innerhalb des Fahrzeugs ausgerichtet und justiert, damit die nachfolgende Kalibrierung des HUD 10 fehlerfrei ausgeführt werden kann. Das Anordnen der Kamera und deren Justierung können automatisch erfolgen, beispielsweise über einen Roboter.

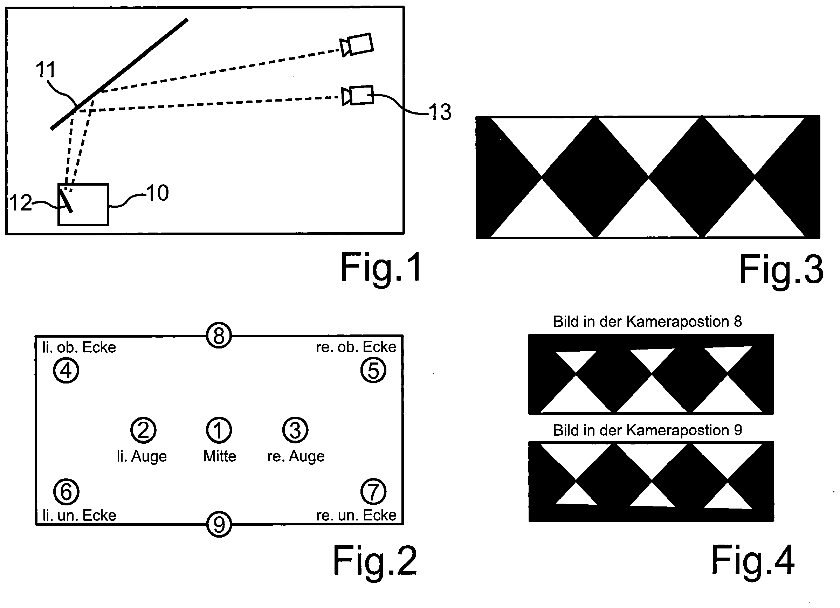

Die Kamera 13 ist auf die Soll-Eyebox gerichtet und befindet sich in einer Ausgangsstellung in der Mitte des Soll-Eyebox, der Position 1 in der Fig. 2. Die Positionen 2 und 3 entsprechen den jeweiligen Augenpositionen des Fahrers, wobei (bei korrekter Einstellung des Head-up-Displays) ein klares und ganzes Bild in dem ganzen Bereich innerhalb des Rahmens (der Soll-Eyebox) wahrgenommen werden kann. Deshalb kann der Fahrer auch noch in den Positionen 4 bis 7 das Bild sehen.

Zur Kalibrierung des HUD 10 wird eine tatsächliche Lage der Eyebox (Ist-Eyebox) ermittelt. Dazu wird eine Beschnittmessung durchgeführt, in welcher ermittelt wird, wie groß der obere oder der untere Teil des Testbilds ist, der in dem von der Kamera 13 aufgenommenen Bild abgeschnitten ist, also für die Kamera 13 nicht sichtbar ist. Dazu kann in dem Testbild mindestens ein vordefiniertes Zeichen (Messzeichen) oder Muster (Messmuster) oder eine vordefinierte Form vorgesehen sein, das bzw. die je nach Relativposition der Eyebox (Ist-Eyebox) zur Kamera 13 beschnitten (abgeschnitten), also für die Kamera 13 nicht sichtbar ist.

Von der Position 1 ist das in Fig. 3 dargestellte Testbild erkennbar. Das Testbild wird von dem HUD 10 auf die Windschutzscheibe 11 projiziert und ist ein an das Verfahren angepasstes und für das Verfahren entwickeltes Kalibrierungsmuster. Es besteht aus wenigstens zwei vollen Rhomben und zwei halben Rhomben. Die zwei vollen Rhomben sind nebeneinander mittig angeordnet und werden von jeweils einer halben Rhombe flankiert. Die Rhomben stehen auf einer Spitze und können quadratisch oder auch rautenförmig ausgebildet sein. Das Testbild entspricht in etwa dem möglichen Projektionsfeld des HUD 10 auf der Windschutzscheibe 11.

Aus der Ausgangsstellung in Position 1 wird die Kamera 13 mittels des Roboters nach außerhalb der Soll-Eyebox verfahren, was durch die Positionen 8 bzw. 9 in Fig. 2 dargestellt ist. Die Kamera 13 befindet sich dabei nicht vollständig außerhalb der Soll-Eyebox, sondern in einem Bereich, von dem aus das Testbild zumindest zum Teil noch sichtbar ist. Die Positionen 8 und 9 sind definierte Positionen für die Kamera 13, wobei die Kamera auch in diesen Positionen justiert werden kann. Die Position 8 ist in der Fig. 1 mit der weiter oben dargestellten Kamera 13 dargestellt, wohingegen die Position 9 die unten dargestellte Kamera 13 darstellt.

Nachdem die Kamera 13 in entweder die Position 8 oder 9 verfahren wurde, wird von dem (beschnittenen) Testbild eine Aufnahme gemacht. Danach wird die Kamera 13 in die jeweils andere Position 8 oder 9 verfahren, dort ebenfalls justiert und von dem (beschnittenen) Testbild wieder eine Aufnahme gemacht. Die beiden Positionen 8 und 9 liegen übereinander, sodass die Kamera lediglich vertikal entweder nach unten oder nach oben verfahren werden muss.

Die aufgenommenen Bilder des (beschnittenen) Testbilds sind in der Fig. 4 dargestellt. Wie sich zeigt, sind die Bilder unvollständig und weisen an ihrem oberen bzw. unteren Rand einen Beschnitt auf. Aufgrund der technischen Auslegung des HUD 10 in Zusammenspiel mit der Projektionsfläche der Windschutzscheibe 11 kann der Fahrer nur einen Teil der dargestellten Informationen sehen, wenn er sich außerhalb der Eyebox mit seinen Augen befindet. Dementsprechend kann die Kamera 13, sobald sie sich außerhalb der Eyebox in den Positionen 8 bzw. 9 befindet, nur eine teilweise Aufnahme des Testbilds machen.

Die aufgenommenen Bilder werden mittels eines Rechenprogramms ausgewertet, bei dem der tatsächlich fehlende Teil des entsprechenden Bildes ermittelt wird. Die Bildauswertung ist speziell für das (beschnittene) Testbild konzipiert, wobei ein entsprechendes Musterbild mit Größenangaben und Formen in dem Programm hinterlegt ist. Die fehlenden Teile, der in der Fig. 4 dargestellten Bilder, sind unterschiedlich groß. Der Beschnitt in dem unteren Bild ist größer, als der Beschnitt in dem oberen Bild. Dabei entspricht das obere Bild einer Aufnahme aus der Position 8 und das untere Bild aus der Position 9.

Nachdem die Aufnahmen der Bildauswertung unterzogen wurden, wird mittels eines wiederum entwickelten Algorithmus' eine Kalibrierung der Eyeboxlage vorgenommen. Dabei wird die Eyebox vertikal verschoben, bis sie in der geforderten Nulllage ist. Die Nulllage kann durch die wiederholte Aufnahme des (beschnittenen) Testbildes verifiziert werden, bis die jeweils fehlenden Teile der Aufnahmen aus den beiden Kamerapositionen 8 und 9 gleich groß sind. Sobald der Beschnitt gleich groß ist, hat die Kamera 13 in den Positionen 8 und 9 den jeweils gleichen Abstand zur errechneten Nulllage.

Mit dem Verfahren lässt sich somit auf einfache Art und Weise die vorher bestimmte Nulllage der Eyebox einstellen, wobei in einer alternativen Ausführungsform auch zwei Kameras 13 eingesetzt werden können.

Der Rechner zur Bildauswertung ist an das HUD 10 angeschlossen, sodass automatisch das HUD 10 eingestellt werden kann. Für gewöhnlich ist lediglich nur ein Spiegel innerhalb des HUD 10 beweglich aufgehängt, sodass hierüber die Kalibrierung in einer Vertikalrichtung erfolgen kann. Die HUD 10 kann derart ausgelegt sein, dass nach der Kalibrierung später noch genügend Spiel für die manuelle Einstellung für einen Fahrer zur Verfügung steht, der kleiner oder größer als der Normfahrer ist und der die Eyebox niedriger oder höher eingestellt haben möchte.

## Patentansprüche

1. Verfahren zur Kalibrierung eines Head-up-Displays (10) eines Kraftfahrzeugs, bei dem eine Kamera (13) in einer definierten Position in dem Fahrzeug positioniert wird und das Head-up-Display (10) ein Testbild auf eine Windschutzscheibe (11) des Fahrzeugs projiziert,
wobei die Kamera (13) aufgrund der technischen Auslegung des Head-up-Displays (10) nur eine teilweise Aufnahme des Testbilds machen kann, wenn sie sich außerhalb einer Ist-Eyebox befindet,
**dadurch gekennzeichnet, dass**
eine Beschnittmessung durchgeführt wird, wobei eine teilweise Aufnahme des Testbilds von oberhalb und/oder unterhalb einer Soll-Eyebox gemacht wird und mittels eines Rechenprogramms ein Teil des Testbildes ermittelt wird, der in der teilweisen Aufnahme des Testbilds fehlt, wobei aus der ermittelten Größe des für die Kamera (13) gerade noch sichtbaren Teils eines vordefinierten Zeichens oder Musters oder einer vordefinierten Form in dem Testbild eine Relativposition der Ist-Eyebox zur Kamera (13) ermittelt wird.

2. Verfahren nach Anspruch 1, wobei eine Höhenkorrektur der Ist-Eyebox durchgeführt wird, indem 2. die Ist-Eyebox in einer vertikalen Richtung nach oben oder unten verstellt wird.

3. Verfahren nach wenigstens einem der vorgehenden Ansprüche,
wobei das Testbild eine Struktur zur Bildauswertung aufweist, wobei wenigstens zwei auf einer Spitze stehende Rauten dargestellt sind.

## Claims

1. Method for calibrating a head-up display (10) for a motor vehicle, in which a camera (13) is positioned in a defined position in said vehicle and the head-up display (10) projects a test image onto a windscreen (11) of said vehicle, wherein the camera (13), due to the technical design of the head-up display (10), can only take a partial picture of the test image if it is outside an actual eyebox, **characterised in that** a cropping measurement is carried out, wherein a partial picture of the test image is taken from above and/or below a target eyebox and a part of the test image which is missing in the partial picture of the test image is determined by means of a computer program, wherein a relative position of the actual eyebox to the camera (13) is determined from the determined size of that part of a predefined character or pattern or a predefined shape in the test image that is just still visible to the camera (13).

2. Method according to claim 1, wherein a height correction of the actual eyebox is carried out by adjusting the actual eyebox in a vertical direction up or down.

3. Method according to at least one of the preceding claims, wherein the test image has a structure for image evaluation, wherein at least two diamonds standing on their tips are shown.

## Revendications

1. Procédé d'étalonnage d'un affichage tête haute (10) d'un véhicule à moteur, dans lequel une caméra (13) est positionnée dans une position définie dans le véhicule et l'affichage tête haute (10) projette une image de test sur un pare-brise (11) du véhicule,
dans lequel, en raison de la conception technique de l'affichage tête haute (10), la caméra (13) ne peut exécuter qu'une prise de vue partielle de l'image de test lorsqu'elle se trouve à l'extérieur d'une région oculaire actuelle,
**caractérisé en ce qu'**
une mesure de rognage est effectuée, dans lequel une prise de vue partielle de l'image de test est exécutée du dessus et/ou du dessous d'une région oculaire de référence et une partie de l'image de test qui manque dans la prise de vue partielle de l'image de test est déterminée au moyen d'un programme informatique, dans lequel, à partir de la taille déterminée de la partie encore visible pour la caméra (13) d'un caractère ou d'un motif prédéfini ou d'une forme prédéfinie dans l'image de test, une position relative de la région oculaire actuelle par rapport à la caméra (13) est déterminée.

2. Procédé selon la revendication 1, dans lequel une correction de hauteur de la région oculaire actuelle est effectuée en déplaçant la région oculaire actuelle dans une direction verticale vers le haut ou vers le bas.

3. Procédé selon au moins l'une quelconque des revendications précédentes,
dans lequel l'image de test présente une structure destinée à l'évaluation de l'image, dans lequel au moins deux losanges se tenant sur une pointe sont représentés.
